# EUROPÄISCHE PATENTSCHRIFT

(11) **EP 3 448 303 B1**
(45) Veröffentlichungstag und Bekanntmachung des Hinweises auf die Patenterteilung: **25.01.2023**
(21) Anmeldenummer: 17719842.1
(22) Anmeldetag: 27.04.2017
(51) Int. Cl.: A61C 13/271, A61C 13/00, A61C 5/20

(54) **VERFAHREN ZUM HERSTELLEN EINER REALEN VERBLENDUNG SOWIE VERBLENDUNG UND BRÜCKE ERHÄLTLICH NACH DEM VERFAHREN**
METHOD FOR PRODUCING A REAL VENEER AS WELL AS VENEER AND BRIDGE THAT CAN BE OBTAINED ACCORDING TO THE METHOD
PROCÉDÉ POUR RÉALISER UN REVÊTEMENT RÉEL ET REVÊTEMENT ET BRIDGE POUVANT ÊTRE OBTENUS À PARTIR DU PROCÉDÉ

(30) Priorität: 28.04.2016 DE 102016107935
(43) Veröffentlichungstag der Anmeldung: 06.03.2019
(73) Patentinhaber: Kulzer GmbH, 63450 Hanau (DE)
(72) Erfinder: BÖHM, Uwe, Dr., 91058 Erlangen (DE); WOLDEGERGIS, Yohannes, 63457 Hanau (DE); RUPPERT, Klaus, Dr., 63477 Maintal (DE)
(74) Vertreter: Bendele, Tanja
(86) Internationale Anmeldenummer: PCT/EP2017/060025
(87) Internationale Veröffentlichungsnummer: WO 2017/186835

(56) Entgegenhaltungen:
- EP-A1- 0 311 214
- EP-A1- 1 992 302
- EP-A1- 2 422 739
- JP-A- H10 277 059

## Beschreibung

Die Erfindung betrifft ein Verfahren zum Herstellen einer realen Verblendung, indem auf einem virtuellen dentalen Gerüst mindestens eine erste virtuelle Verblendungsschicht konstruiert wird, die entlang des Verlaufs ihrer Äquatorlinie mit einer Trennlinie versehen wird, um die Verblendungsschicht in mindestens zwei virtuelle Teilbereiche zu separieren. Die digitalen Daten der virtuellen Teilbereiche werden verwendet, um in einem generativen oder ablativen Verfahren, insbesondere einem CAD/CAM-Verfahren, daraus die realen Teilbereiche der ersten realen Verblendungsschicht herzustellen. Nachfolgend werden die realen Teilbereiche der ersten realen Verblendungsschicht auf dem realen dentalen Gerüst angeordnet, um die reale Verblendung, insbesondere eine verblendete Brücke, zu erhalten.

CAD/CAM-Verfahren sind computergestützte Herstellverfahren von ästhetischen prothetischen dentalen Versorgungen, wie Brücken und Kronen. Dabei bedeutet in CAD/CAM die englische Abkürzung CAD Computer Aided Design und CAM für Computer Aided Manufacturing.

Stereolithographie-Verfahren zählen zu den Rapid-Prototyping-Verfahren und zu den CAD/CAM-Verfahren. Die Rapid-Prototyping-Verfahren sind dreidimensionale Druckprozesse. In Rapid-Prototyping Verfahren werden CAD-Daten, in der Regel über eine STL-Schnittstelle, vorzugsweise automatisiert in ein dreidimensionales Werkstück, hier eine reale Verblendung oder ein reales dentales Gerüst umgesetzt. Zu den Rapid-Prototyping Verfahren zählen erfindungsgemäß Fused-Deposition Modeling (FDM), Laminated Object Modeling (MOD), Multi Jet Modeling (MJM), Selektives Laserschmelzen (SLM), Selektives Lasersintern (SLS), Space Puzzle Molding (SPM), Stereolithographie (STL, SLA), Elektronenstrahlschmelzen (EBM), Binder Jetting (3D-Druck). Die Rapid-Prototyping-Verfahren FDM, SLM und EBM werden auch als 3D-Druck bezeichnet.

Neben diesen automatisierten generativen Verfahren zur Herstellung von 3D-Werkstücken können diese auch mittels abtragender Verfahren aus den CAD-Daten in einem CAM-Verfahren hergestellt werden. Ein übliches abtragendes Verfahren kann umfassen Fräsen, Bohren, Schneiden, Abplatzen, Schmelzen und/oder mindestens zwei der abtragenden Verfahrensschritte. Neben den bekannten CAD/CAM-Verfahren kann zukünftig auch das sogenannte Lasermilling von 3D-Werkstücken zur Herstellung von prothetischen dentalen Versorgungen verwendet werden. Um die gewünschten Resultate zu erhalten, sind die Materialeigenschaften der Werkstücke spezifisch an den Lasermilling-Prozess anzupassen.

EP2422739A1 betrifft ein Verfahren zur Herstellung von Zahnersatz indem auf ein Trägergerüst Schichten von im Raum gekrümmten pulverförmigen Schichten aufgetragen werden, indem ein Materialgemisch mittels einer Auftragungseinrichtung auf das Trägergerüst aufgetragen werden. EP311214 A1 offenbart die Herstellung einer Krone, indem eine zu sinternde Schicht auf ein Model in Form eines konisch zulaufenden Stumpfes aus keramischem Material aufgetragen wird. Die gesinterte Schicht wird sodann gefräst und das Model aus keramischem Material entfernt. Das Model weist aufgrund der konischen Stumpfform keine Hinterschneidung auf.

Die Aufgabe der Erfindung bestand darin, ein Verfahren zu entwickeln, das eine automatisierte Herstellung von individualisierten Verblendungen auf individualisierten dentalen Gerüsten zur Herstellung von Brücken erlaubt. Vorzugsweise soll die Herstellung von vollanatomischen dentalen Brücken mit mindestens einer Verblendungsschicht ausgehend von digitalen Daten (CAD-Verfahren) ermöglicht werden. Des Weiteren soll ein Verfahren entwickelt werden, das die manuelle Anfertigung von Verblendungen auf dentalen Gerüsten vermeidet und ein weitgehend automatisiertes Herstellverfahren nach der manuellen Abdrucknahme oder einem Intraoralscan der Zahn- und Gingivasituation des Patienten bis zur Bereitstellung der Brücke erlaubt. Des Weiteren soll die Verblendung von werkstoffeinstückigen Brücken ermöglicht werden.

Gelöst werden die Aufgaben der Erfindung durch das erfindungsgemäße Verfahren nach Anspruch 1 oder 2 sowie durch die Verblendung erhältlich nach dem Verfahren nach einem der Ansprüche 5 bis 9. Bevorzugte Ausführungsformen des Verfahrens werden in den Unteransprüchen und detaillierter in der Beschreibung dargestellt.

Gegenstand der Erfindung ist die Herstellung, vorzugsweise die automatisierte Herstellung, einer realen Verblendung für ein reales dentales Gerüst umfassend bis zu 16 Gerüstkörper, wobei das Gerüst aus Metall, einer Legierung, Keramik oder anderen hochfesten Werkstoffen ist. Dieses dentale Gerüst wird digitalisiert oder liegt als CAD-Datensatz als virtuelles Gerüst bzw. als digitales Volumengerüst vor und ist vorzugsweise in einem automatisierten CAM-Verfahren hergestellt worden. Auf dieses virtuelle Gerüst wird mittels einer entsprechenden Software zunächst eine virtuelle Verblendungsschicht konstruiert, die vorzugsweise ebenso automatisiert hergestellt werden kann.

Diese virtuelle Verblendungsschicht wird digital entlang des Verlaufes des Äquators der Verblendungsschicht in mindestens zwei Teilbereiche aufgetrennt. Vorzugsweise verlaufen die jeweiligen Trennlinien entlang der jeweiligen Äquatorlinie der ersten und optional mindestens einer weiteren virtuellen Verblendungsschicht. Die Äquatorlinie verläuft auf der äußeren Verblendungsschicht, d.h. der äußeren Fläche des prothetischen Zahns, im labialen, bukkalen und/oder vestibulären Bereich und/oder auf der inneren Verblendungsschicht, d.h. der inneren Fläche des prothetischen Zahns, im lingualen, palatinalen, und/oder oralen Bereich verlaufen.

Durch das erfindungsgemäße Vorsehen von Trennlinien, die in Trennfugen der realen Verblendungsschicht resultieren, kann ein Fügen der Verblendungsschicht über das Gerüst trotz bestehender Hinterschnitte erfolgen. Falls nötig, kann ein Trennen der Verblendungs-schicht in mehr als zwei Teile stattfinden. Die einzelnen Brückenglieder der dentalen Restauration sind dabei im Interdentalbereich (synonym interdentalen Bereich) miteinander verbunden, so dass ein Aufkleben auf das Gerüst in einem Arbeitsschritt erfolgen kann.

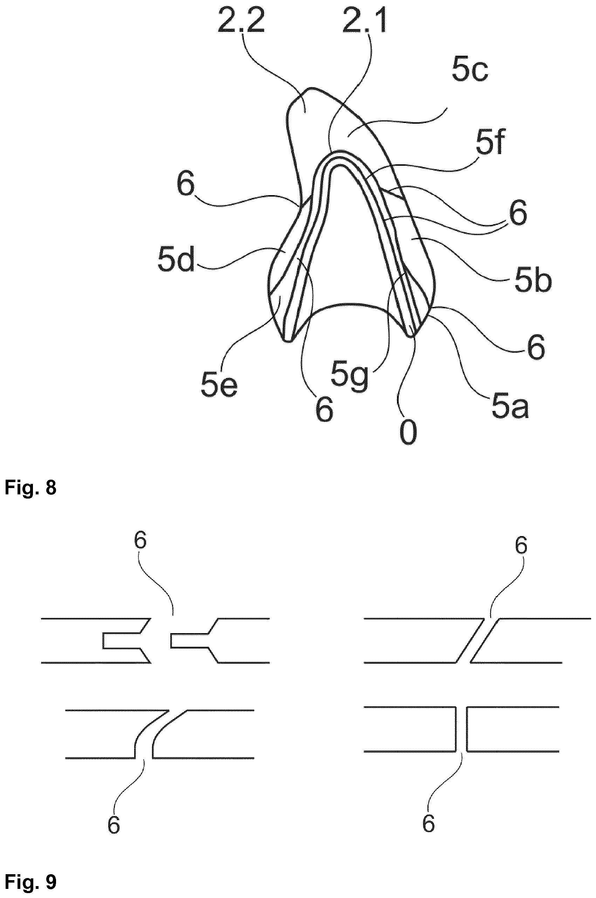

Erfindungsgemäß ist das Gerüst werkstoffeinstückig. Die Verblendung des Gerüstes zur Ausbildung der Brücke umfasst mindestens eine Verblendungsschicht, vorteilhafterweise werden auf der Brücke mehrere Verblendungsschichten als Farb- und/oder Materialschichten auf ein Gerüst aufgebracht, um in einem Verfahrensschritt ein hochästhetisches Ergebnis in Bezug auf den Aufbau und die originalgetreue Wiedergabe des natürlichen Zahnaufbaus umfassend Hals/Dentin/Schneide-Schicht zu imitieren. Dabei ist es besonders bevorzugt, wenn sich eine Verblendungsschicht im Schneidebereich über eine Trennfuge an den Dentinbereich anschließt, der sich wiederum über eine Trennfuge an den Halsbereich anschließt, wie in Figur 8 dargestellt.

Die jeweilige Trennfuge kann nahezu rechtwinklig in Bezug zur Ebene der Verblendungsschicht oder in einem von 90° abweichenden Winkel in Bezug zur Verblendungsschicht, also als schräg verlaufende Trennfuge oder als ein Nutsystem in jeder vorstellbaren Geometrie, ausgebildet sein, um das Verbindungsmittel abzudecken.

Somit ist die Trennfuge vorzugsweise so gestaltet, dass der in der Trennfuge als Verbindungsmittel vorgesehene Zement nach außen (Labialseite) nur sehr wenig oder gar nicht sichtbar wird. Durch diese Maßnahme werden ästhetische Beeinträchtigungen des Erscheinungsbildes der Brücke vermieden. Die Trennfuge kann auch mit einer sich verändernden Geometrie oder Schichtstärke gestaltet werden, so dass die Trennfuge zum Außenbereich immer dünner wird.

Man kann sich auch eine Trennung entlang einer Hals-, Dentin- Schneideschichtung vorstellen, so dass man diese nacheinander auf dem Gerüst zusammensetzt.

Das Material, aus dem die Verblendungsschicht besteht, kann eine Keramik, eine dentale Keramik, Composite, PMMA oder Zusammensetzung umfassend mindestens zwei der genannten Materialien umfassen.

Die Befestigung der Verblendungsschicht erfolgt mittels eines Verbindungsmittels, indem die Teile der Verblendungsschicht geklebt, zementiert oder aufgeschrumpft werden.

Wird das Gerüst aus einem Werkstück in einem Fräsprozess aus dem Gerüstmaterial hergestellt, weist das Gerüst vorzugsweise keine makromechanischen Retentionen auf, so dass einem dauerhaften, randspaltfreien chemischen Haftverbund der Vorzug gegeben wird.

Gegenstand der Erfindung ist ein Verfahren zum Herstellen einer realen Verblendung sowie eine Verblendung erhältlich nach dem Verfahren umfassend mindestens eine reale Verblendungsschicht für ein dentales Gerüst zur Herstellung einer verblendeten, dentalen Brücke mit mehreren Brückenkörpern, vorzugsweise einer Brücke ausgewählt aus mindestens einer stumpfgetragenen, dreigliedrigen, einspannigen Brücke, insbesondere umfassend zwei Brückenpfeiler und ein Brückenglied (Pontic), bis mehrspannigen Brücke, insbesondere umfassend mindestens drei Brückenpfeiler und mindestens zwei Brückenglieder (Pontic) oder einer Implantat getragenen Brücke, indem
(i) ein virtuelles 3D-Modell eines dentalen Gerüstes, umfassend ein bis sechzehn Gerüstkörper, die im interdentalen Bereich verbunden sind, bereitgestellt wird, wobei das virtuelle Modell die Oberflächentopographie des realen dentalen Gerüstes aufweisen kann bzw. wiedergeben kann, insbesondere kann die Oberflächentopographie des virtuellen Modells den digitalen Daten eines virtuellen Gerüstes entsprechen oder aus den digitalen Daten eines digital gescannten realen dentalen Gerüstes erhalten werden, (ii) auf die Oberflächentopographie des virtuellen 3D-Modells des dentalen Gerüstes wird mindestens eine zumindest teilweise die Oberfläche des virtuellen Gerüstes bedeckende erste virtuelle Verblendungsschicht konstruiert,
(iii) die mindestens eine erste virtuelle Verblendungsschicht wird entlang des Verlaufs ihrer Äquatorlinie auf ihrer Oberflächentopographie jeweils mit einer Trennlinie versehen,
(iv) entlang dieser Trennlinie wird die mindestens eine erste virtuelle Verblendungsschicht in jeweils zwei virtuelle Teilbereiche der jeweiligen Verblendungsschicht separiert, und es wird
(v) ein erster und zweiter Teilbereich der mindestens einen ersten Verblendungsschicht erhalten,
(vi) optional werden auf der Oberflächentopographie der mindestens einen ersten virtuellen Verblendungsschicht weitere Trennlinien vorgesehen, um weitere virtuelle Teilbereiche zu definieren,
(vii) die digitalen Daten, insbesondere CAD-Daten, des jeweiligen ersten und zweiten virtuellen Teilbereiches der mindestens einen ersten virtuellen Verblendungsschicht werden bereitgestellt sowie der optionalen weiteren virtuellen Teilbereiche der Verblendungsschicht,
(viii) der erste und zweite reale Teilbereich der mindestens einen ersten realen Verblendungs-schicht sowie die optionalen weiteren realen Teilbereiche der jeweiligen realen Verblendungs-schicht werden hergestellt mittels generativer oder ablativer Verfahren, insbesondere automatisierter Computer gestützter generativer und/oder ablativer Verfahren, unter Verwendung der digitalen Daten, vorzugsweise aus Schritt (vii), insbesondere der CAD-Daten,
(ix) der erste und zweite reale Teilbereich der mindestens einen ersten realen Verblendungs-schicht sowie der optionalen weiteren realen Teilbereiche der realen Verblendungsschicht werden jeweils zu einer ersten realen Verblendungsschicht auf dem dentalen Gerüst angeordnet, und
(x) es wird mindestens eine erste Verblendungsschicht der realen Verblendung auf dem Gerüst erhalten.

Entsprechend kann optional mindestens eine weitere virtuelle Verblendungsschicht entlang des Verlaufs ihrer Äquatorlinie auf ihrer Oberflächentopographie jeweils mit einer Trennlinie versehen werden, vorzugsweise werden zwei bis zehn weitere virtuelle Verblendschichten jeweils entlang des Verlaufs ihrer jeweiligen Äquatorlinie auf ihrer Oberfläche jeweils mit einer Trennlinie versehen, und jeweils unabhängig in zwei virtuelle Teilbereiche separiert, so dass ein erster und zweiter Teilbereich der jeweiligen weiteren virtuellen Verblendschicht erhalten wird. Entsprechend werden dann später die jeweiligen realen Verblendschichten erhalten.

Als Brückenkörper gelten Brückenpfeiler (Retainer), Brückenglied (Pontic) sowie auch Implantat getragene Brückenglieder. Als Gerüstkörper gelten Gerüstpfeiler (unverblendete Retainer), Gerüstglied (unverblendetes Pontic) sowie auch Implantat getragene Gerüstglieder.

Vorzugsweise ist der erste reale Teilbereich werkstoffeinstückig und/oder der zweite reale Teilbereich werkstoffeinstückig. Vorzugsweise wird nach dem Anordnen mindestens einer realen Verblendungsschicht eine verblendete, dentale Brücke mit mindestens einem bis mehreren Brückenkörpern erhalten. Offenbart wird eine Brücke erhältlich nach dem erfindungsgemäßen Verfahren.

Dem Fachmann ist bekannt, dass er ein virtuelles 3D-Modell eines dentalen Gerüstes umfassend bis sechzehn Gerüstkörper bereitstellen kann, indem er die entsprechenden digitalen Zahndaten aus einer digitalen Bibliothek (z.B. 3Shape Dental System^{®}) auswählt und/oder zusammenstellt und optional an die digitalen Daten eines Intraoralscans eines mindestens teilweise bezahnten oder zahnlosen Kiefers oder die digitalen Daten eines Scans eines Gebissabdrucks oder eines zumindest teilweise bis vollständig zahnlosen Kiefers anpasst. Zudem kann die Okklusion des virtuellen 3D-Modells virtuell in dem Fachmann bekannten Softwareprogrammen (z.B. 3Shape Dental System^{®}, ExoCad^{®}) geprüft werden. Das virtuelle 3D-Modell des dentalen Gerüstes kann in einem Computer, auf einem Speichermedium, in einer Cloud oder auf einem Datenträger bereitgestellt werden.

Die erfindungsgemäße Verblendung kann vorzugsweise eine erste opake Verblendungsschicht aufweisen, um beispielsweise Gerüststrukturen abzudecken. Alternativ kann die erste Verblendungsschicht auch direkt auf ein Zirkondioxidgerüst aufgebracht werden und in diesem Fall eine definierte Transparenz aufweisen. Zweck der Verblendung kann in diesem Fall die Bereitstellung einer vollanatomischen Verblendung mit geringerer Härte als Zirkondioxid und/oder einem sehr ästhetischen, an den Farbverlauf eines natürlichen Zahns angepasste Verblendung sein. Die Härte von Zirkondioxid liegt im Bereich von 1200 bis 1300 HV10. Die Verblendung weist vorzugsweise eine Härte von ca. 50 bis 600 HV10 auf, insbesondere eine Härte von 50 bis 500, vorzugsweise von 250 bis 500 HV10 oder 400 bis 600 HV10 (mit HV = Verfahren, 10 = Prüfkraft F in Kilopond). Als digitale Daten gelten CAD-Daten, ein STL-Datensatz sowie allgemein digital erstellte Oberflächen von 3D-Körpern, die mit Hilfe von Dreiecksfacetten beschreiben werden. Die generativen und/oder ablativen Verfahren umfassen vorzugsweise automatisierte Computer gestützte generative und/oder ablative Verfahren, unter Verwendung der digitalen Daten, insbesondere CAD-Daten, wie Rapid-Prototyping-Verfahren, wie beispielsweise Fused-Deposition Modeling (FDM), Laminated Object Modeling (MOD), Multi Jet Modeling (MJM), Selektives Laserschmelzen (SLM), Selektives Lasersintern (SLS), Space Puzzle Molding (SPM), Stereolithographie (STL, SLA), Elektronenstrahlschmelzen (EBM), Binder Jetting (3D-Druck) sowie auch abtragender CAM-Verfahren, umfassend Fräsen, Bohren, Schneiden, Abplatzen, Schmelzen und/oder mindestens zwei der abtragenden Verfahrensschritte. Unter CAD/CAM-Verfahren wird auch das sogenannte Lasermilling von 3D-Werkstücken verstanden, in dem mit einem Laser aus einem Werkstück ein reales Modell, insbesondere durch Schneiden und/oder Abplatzen von Materialstückchen, herausgearbeitet wird. Die erfindungsgemäßen Brücken umfassend ein dentales Gerüst und/oder mindestens eine Verblendung können ebenfalls nach allen bekannten *Rapid Prototyping (RP)* Verfahren, *Rapid Tooling (RT),* wie Lasersinter-Verfahren und *Rapid Manufacturing (RM)* Verfahren, wie MJM-Verfahren hergestellt werden.

Nach einer besonders bevorzugten Verfahrensvariante wird in dem erfindungsgemäßen Verfahren, die mindestens eine erste und optional, mindestens eine weitere reale Verblendungsschicht für ein dentales Gerüst zur Herstellung einer verblendeten, dentalen Brücke mit mehreren Brückenkörpern hergestellt, indem
(i) ein virtuelles 3D-Modell eines dentalen Gerüstes umfassend ein bis sechzehn Gerüstkörper, die im interdentalen Bereich verbunden sind, bereitgestellt wird, wobei das virtuelle Modell die Oberflächentopographie des realen dentalen Gerüstes aufweist,
(ii) auf die Oberflächentopographie des virtuellen 3D-Modells des dentalen Gerüstes wird mindestens eine, zumindest teilweise die Oberfläche des virtuellen Gerüstes bedeckende erste virtuelle Verblendungsschicht konstruiert, optional wird auf die erste virtuelle Verblendung mindestens eine weitere virtuelle Verblendungsschicht, die zumindest teilweise die erste virtuelle Verblendungsschicht bedeckt, konstruiert,
(iii) die erste und optional die mindestens eine weitere virtuelle Verblendungsschicht werden jeweils unabhängig voneinander entlang des Verlaufs ihrer jeweiligen Äquatorlinie auf ihrer Oberflächentopographie jeweils mit einer Trennlinie versehen,
(iv) entlang der jeweiligen Trennlinie wird die eine erste und optional die mindestens eine weitere virtuelle Verblendungsschicht in jeweils zwei virtuelle Teilbereiche separiert,
(v) Erhalten eines ersten und zweiten Teilbereiches der jeweiligen Verblendungsschicht,
(vi) optional werden auf der Oberflächentopographie der ersten und optional der weiteren virtuellen Verblendungsschicht weitere Trennlinien vorgesehen, um weitere virtuelle Teilbereiche zu definieren,
(vii) Bereitstellen der digitalen Daten des jeweiligen ersten und zweiten virtuellen Teilbereiches der ersten und optional der mindestens einen weiteren virtuellen Verblendungsschicht sowie der optionalen weiteren virtuellen Teilbereiche der jeweiligen Verblendungsschicht, und
(viii) Herstellen des jeweiligen ersten und zweiten realen Teilbereiches der ersten und optional der mindestens einen weiteren realen Verblendungsschicht sowie der optionalen weiteren realen Teilbereiche der jeweiligen realen Verblendungsschicht mittels generativer oder ablativer Verfahren, insbesondere automatisierter Computer gestützter generativer und/oder ablativer Verfahren, unter Verwendung der digitalen Daten, insbesondere CAD-Daten,
(ix) Anordnen des jeweiligen ersten und zweiten realen Teilbereiches der ersten und optional der mindestens einen weiteren realen Verblendungsschicht sowie der optionalen weiteren realen Teilbereiche der jeweiligen realen Verblendungsschicht zu einer ersten und optional weiteren realen Verblendungsschicht auf dem dentalen Gerüst und
(x) Erhalten mindestens einer ersten und optional mindestens einer weiteren Verblendungsschicht(en) der realen Verblendung.

Die Trennfuge in der realen Verblendung verläuft entlang der Trennlinie auf der virtuellen Verblendung.

Unter einem virtuellen Gerüst, einer virtuellen Verblendung, virtuellem Gerüstkörper, virtuellen Oberflächentopographie etc. werden nachfolgend die aus den digitalen CAD-Daten als 3D-Oberflächenhülle dargestellten Gerüste, Verblendung etc. verstanden. Unter einem realen Gerüst, einer realen Verblendung etc. werden die tatsächlichen, aus dem jeweiligen Material hergestellten Modelle oder prothetischen Formteile verstanden.

Nach einer weiteren Alternative können (vi) auf der Oberflächentopographie der ersten und optional der weiteren virtuellen Verblendungsschicht weitere Trennlinien vorgesehen sein, um weitere virtuelle Teilbereiche zu definieren, wobei vorzugsweise die jeweiligen Trennlinien unabhängig voneinander entlang einer virtuellen Halsverblendungsschicht, einer Dentinverblendungsschicht, und/oder einer Schneideverblendungsschicht verlaufen. Vorteilhaft gibt das virtuelle Modell die Oberflächentopographie des realen dentalen Gerüstes wieder. Bevorzugt liegt in der realen Verblendungsschicht jeweils mindestens eine Trennfuge zwischen der realen Halsverblendungsschicht, Dentinverblendungsschicht und/oder der Schneideverblendungsschicht vor.

Ebenso ist es besonders bevorzugt, wenn mindestens eine Trennlinie als virtuelle Trennfuge ausgebildet ist, vorzugsweise kann die Trennfuge als Anschlussfuge oder als Pressfuge vorliegen,
a) wobei die virtuelle Trennfuge als Übergang zwischen mindestens zwei virtuellen Teilbereichen der virtuellen Verblendungsschicht vorliegt, und insbesondere mit definierter Stoßbreite als Abstand zwischen den mindestens zwei virtuellen Teilbereichen vorliegt, und/oder
b) die virtuelle Trennfuge der jeweiligen virtuellen Teilbereiche als Positiv und Negativ vorliegt, und/oder
c) wobei in der virtuellen Verblendungsschicht jeweils mindestens eine virtuelle Trennfuge zwischen der virtuellen Halsverblendungsschicht, Dentinverblendungsschicht und/oder der Schneideverblendungsschicht vorliegt, oder
d) die virtuelle Trennfuge zumindest teilweise mit Nut-Feder-Verbindung versehen ist, und/oder
e) der jeweilige Teilbereich der virtuellen Verblendung über einen kraftschlüssigen Verbund des Teilbereiches und/oder des Teilbereiches mit dem virtuellen Gerüst verbunden ist, und/oder
f) der jeweilige Teilbereich der virtuellen Verblendung mindestens eine Nut auf der gerüstseitigen, inneren Oberfläche aufweist, oder
g) eine Kombination von a) und c) oder b) und c) oder b) und d) oder b) und e) oder a) und d) oder a) und e) oder a) und f) oder a), c) und d) oder d) und e) vorliegt, wobei die vorgenannte(n) virtuelle(n) Trennfug(en) in einem generativen oder ablativen Herstellverfahren in den realen Verblendungsschichten als reale Trennfugen hergestellt werden. Daher kann die reale Brücke mit mindestens einer ersten realen Verblendung entsprechende reale Trennfugen aufweisen.

Somit ist es ebenfalls besonders bevorzugt, wenn mindestens eine reale Trennfuge einer Verblendungsschicht wie folgt ausgebildet ist:
a) wobei die reale Trennfuge als Übergang zwischen mindestens zwei realen Teilbereichen der realen Verblendungsschicht vorliegt, und insbesondere mit definierter Stoßbreite als Abstand zwischen den mindestens zwei realen Teilbereichen vorliegt, und/oder
b) die reale Trennfuge der jeweiligen realen Teilbereiche als Positiv und Negativ vorliegt, und/oder
c) wobei in der realen Verblendungsschicht jeweils mindestens eine reale Trennfuge zwischen der realen Halsverblendungsschicht, Dentinverblendungsschicht und/oder der Schneideverblendungsschicht vorliegt, oder
d) die reale Trennfuge zumindest teilweise mit Nut-Feder-Verbindung versehen ist, und/oder
e) der jeweilige Teilbereich der realen Verblendung über einen kraftschlüssigen Verbund des Teilbereiches und/oder des Teilbereiches mit dem realen Gerüst verbunden ist, und/oder
f) der jeweilige Teilbereich der realen Verblendung mindestens eine Nut auf der gerüstseitigen, inneren Oberfläche aufweist, oder
f) eine Kombination von a) und c) oder b) und c) oder b) und d) oder b) und e) oder a) und d) oder a) und e) oder a) und f) oder a), c) und d) oder d) und e). Die reale Trennfuge kann als Anschlussfuge oder auch als Pressfuge sowie als Negativ und Positiv in jeder erdenklichen Geometrie vorliegen.

Mit dem erfindungsgemäßen Verfahren können Verblendungen hergestellt werden mit realen oder virtuellen ersten oder optional mindestens einer weiteren Verblendungsschicht, die umfasst a) die Okklusalkante oder b) die Okkulsalkante und mindestens einen labialen Zahnhals, oder c) eine Vollverblendung der Okklusalkante sowie mindestens einen oralen, labialen und approximalen Zahnhals oder mehrere Zahnhälse, oder d) eine Teilverblendung umfassend die Verblendung der Okklusalkante sowie mindestens einen labialen und zumindest teilweise approximalen Zahnhals. Die Verblendungsschicht kann eine Verblendschulter aufweisen. Dabei verläuft vorzugsweise die jeweilige Trennlinie auf der Oberflächentopographie der virtuellen Verblendungsschicht und/oder die jeweilige Trennfuge an der die jeweiligen Teilbereiche aneinanderstoßen außerhalb des jeweiligen Okklusalbereiches.

Nach besonders bevorzugten Varianten kann die reale oder virtuelle erste oder optional mindestens eine weitere Verblendungsschicht mit unterschiedlichen Farben aufweisen und/oder eine unterschiedliche Transparenz aufweisen. Bevorzugte Farben einer Verblendungsschicht umfasst vorzugsweise ein Material mit den folgenden Farbwerten der Farbe A3: L von 50 bis 95, a von -5 bis 5, b von 3 bis 25. Eine bevorzugte Transparenz für die Scheideschicht beträgt 80 bis 98%.

Eine innere Verblendungsschicht ist vorzugsweise aus opaken Material mit folgenden Farbwerten der Farbe A3: L von 50 bis 80; a von 2 bis 5, b von 15 bis 22. Eine äußere Verblendungsschicht ist vorzugsweise aus einem transparenten Material mit folgenden Farbwerten der Farbe A3: L von 60 bis 95; a von -5 bis 3; b von 3 bis 2. Mit L = Helligkeit, a = rot, b = blau gemäß dem L*a*b*-Farbsystem (DIN EN ISO 11664-4).

Des Weiteren ist es bevorzugt, wenn das (ix) Anordnen des jeweiligen ersten und zweiten realen Teilbereiches der ersten und optional der mindestens einen weiteren realen Verblendungsschicht sowie der optionalen weiteren realen Teilbereiche der jeweiligen realen Verblendungsschicht zu einer ersten und optional weiteren realen Verblendschicht erfolgt, indem a) ein reales dentales Gerüst umfassend bis sechzehn Gerüstkörper, die im interdentalen Bereich verbunden sind, bereitgestellt wird, und b) der jeweilige erste und zweite reale Teilbereich der ersten und optional der mindestens einen weiteren realen Verblendungsschicht sowie die optionalen weiteren realen Teilbereiche der jeweiligen realen Verblendungsschicht zu einer ersten und optional weiteren realen Verblendschicht auf dem realen dentalen Gerüst angeordnet werden, wobei b.1) die vorgenannten Teilbereiche und/oder die Oberfläche des Gerüstes zumindest teilweise mit einem Verbindungsmittel, insbesondere einem dentalen Zement, einem Kleber, und/oder einer Mischung umfassend diese, versehen wird oder b.2) der jeweilige reale Teilbereich auf das reale Gerüst aufgeschrumpft wird, und
(x) eine verblendete, dentale Brücke mit mehreren Brückenkörpern erhalten wird.

Bevorzugte Verbindungsmittel umfassen dentale Zemente, wie Glasionomerzement, harzverstärkte Glasionomerzemente, Kompositzemente. Ebenso Gegenstand der Erfindung ist die Verwendung eines Verbindungsmittels zum permanenten Befestigen mindestens einer ersten Verblendungsschicht, die in mindestens einen ersten und zweiten Teilbereich aufgeteilt ist auf einem dentalen Gerüst, zum Ausfüllen der Trennfuge zwischen den Teilbereichen und/oder zum permanenten Befestigen von mindestens einer weiteren Verblendungsschicht auf einer anderen Verblendungsschicht.

Nach einer besonders bevorzugten Ausführungsform des Verfahrens wird a) ein reales 3D-Modell eines dentalen Gerüstes umfassend ein bis sechzehn Gerüstkörper je Kiefer bereitgestellt, vorzugsweise ein werkstoffeinstückiges Gerüst, indem aus einem virtuellen 3D-Modell eines dentalen Gerüstes umfassend ein bis sechzehn Gerüstkörper in einem generativen oder ablativen Verfahren das reale dentale Gerüst hergestellt wird, oder b) ein virtuelles 3D-Modell eines dentalen Gerüstes umfassend ein bis sechzehn Gerüstkörper bereitgestellt wird, indem ein reales Modell eines dentalen Gerüstes umfassend ein bis sechzehn Gerüstkörper digital gescannt wird, und das virtuelle 3D-Modell des dentalen Gerüstes erhalten wird.

Dabei ist es besonders bevorzugt, wenn das reale dentale Gerüst werkstoffeinstückig ist, beispielsweise in dem es aus einem Rohling gefräst, geschliffen, geschnitten oder gelasert wurde.

Ferner ist das reale dentale Gerüst vorzugsweise aus einem Material umfassend mindestens ein Metall ausgewählt aus Gold, Titan, Kobalt, Chrom, eine Legierung ausgewählt aus Kobaltchrom, Kobaltnickel, eine Titanlegierung, Goldlegierung, Silberlegierung, Palladiumlegierung, Silberpalladiumlegierung, eine dentale Keramik ausgewählt aus Metalloxid, Zirkondioxid, Aluminiumoxid, Silikaten, Zirkondioxid verstärktes Aluminiumoxid, Aluminiumoxid verstärktes Zirkondioxid, Dilithium-Silikat-Keramik, polymeres Material, wie umfassend Polyetherketon basierte Polymere und/oder Poly(meth)acrylat basierten Polymeren, Zusammensetzungen umfassend wie Polyetherketon basierte Polymere und/oder Poly(meth)acrylat basierte Polymere und anorganische Füllstoffe, oder Hybridwerkstoffe der vorgenannten Materialien.

Die ersten oder mindestens eine weitere reale Verblendungsschicht, der erste und zweite sowie die weiteren Teilbereiche der jeweiligen realen Verblendungsschicht, sind vorzugsweise aus einem Material umfassend eine dentale Keramik ausgewählt aus Metalloxid, Zirkondioxid, Aluminiumoxid, Silikaten, umfassend dentale Kompositmaterialien, polymeres Material, Polymethyl(meth)acrylat basierten Polymeren, Zusammensetzungen umfassend Polymethyl(meth)acrylat basierte Polymere und anorganische Füllstoffe, oder Hybridwerkstoffe der vorgenannten Materialien. Weitere bevorzugte polymere Materialien zur Herstellung von provisorischen Brücken, Gerüsten, Verblendungsschichten und/oder Teilbereichen der Verblendungsschichten umfassen Fluorpolymere, Polysulfid enthaltenden Polymeren, Polysulfon enthaltenden Polymere, Polyaryletherketonen, Polyimiden, PAEK (Polyaryletherketonen), PEEK (Polyetheretherketonen), PEK (Polyether-ketonen); PEKK (Poly(etherketonketonen)), PEEEK (Poly(etheretheretherketon)), PEEKK (Poly(etheretherketonketonen)), PEKEKK (Poly(etherketonetherketon-ketonen); PES (Polyarylsulfonen), PPSU (Polyarylsulfonen), PSU (Polysulfonen), PPS (Polyphenylensulfiden), PFA (Perfluoralkoxy-Polymeren), PFE (Poly(fluorenylenethylen)polymeren); PVDF (Polyvinylidenfluoriden), PCTFE (Polytetrafluoroethylen), PAI (Polyamideimiden); PI (Polyimiden), PEI (Polyetherimiden), PBI (Polybenz-imidazolen).

Die über das Verfahren hergestellten realen ersten oder mindestens eine weitere Verblendungs-schicht weisen vorzugsweise eine Schichtdicke von 10 µm bis 5000 µm auf, insbesondere 50 µm bis 5000 µm, vorzugsweise von 100 µm bis 5000 µm, besonders bevorzugt von 700 µm bis 3000 µm, alternativ 100 µm bis 2000 µm, alternativ 700 µm bis 2000 µm.

Gegenstand der Erfindung ist auch ein Verfahren zum Herstellen mindestens einer realen Verblendungsschicht für ein reales dentales Gerüst, vorzugsweise ein werkstoffeinstückiges Gerüst.

Im Folgenden werden Ausführungsbeispiele der Erfindung anhand von schematisch dargestellten Figuren erläutert, ohne jedoch dabei die Erfindung zu beschränken.

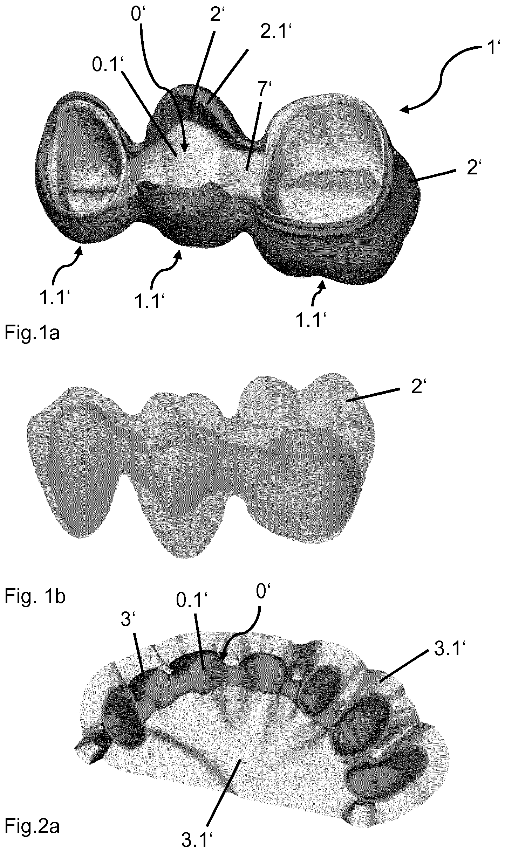

- **Figuren 1a und 1b:**: Stellen dar ein virtuelles Modell einer Brücke **1**' mit Brückenkörpern **1.1'** umfassend ein Gerüst **0'** mit Gerüstkörpern **0.1**', die im virtuellen interdentalen Bereich **7**' als reales Gerüst einstückig sind und mit einer Verblendung **2'** umfassend eine erste Verblendungsschicht **2.1'**. **Figur 1b** zeigt eine virtuelle Brücke **1**' mit einer transparent dargestellten Verblendungsschicht **2`.**

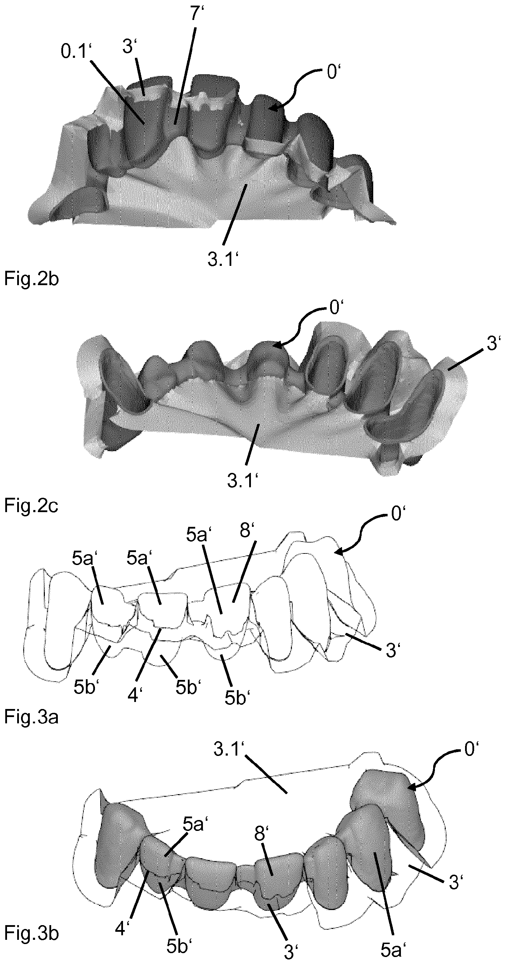

- **Figuren 2a und 2b:**: Zeigen ein virtuelles Gerüst **0`** in **Figur 2a** mit Ansicht von unten mit sieben Gerüstkörpern **0.1**' von denen vier Gerüstkörper stumpfgetragen sind und drei unverblendete Pontics mit dargestellter Äquatorebene **3.1'**, die an der Oberflächentopographie des Gerüstes die Äquatorlinie **3`** bildet. **Figur 2b** stellt das Gerüst in einer Ansicht von vorne auf den Zahnbogen mit Äquatorebene **3.1'** und vestibulären Äquatorlinien **3'** an einem virtuellen Gerüst **0'** mit virtuellen Gerüstkörpern **0.1**' und virtuellem interdental Bereich **7**' dar.
- **Figur 2c:**: Zeigt eine weitere Ansicht des Gerüstes **0'** der **Figuren 2a** und **2b** in einer Ansicht von lingual auf die Unterseite auf die Äquatorebene **3.1'** mit lingualen Äquatorlinien **3`.**
- **Figuren 3a und 3b:**: Stellen dar zwei verschiedene Ansichten einer Ansicht von vestibulär auf das Gerüst **0`** an dem die Äquatorlinien **3`** der Äquatorebene **3.1'** auf der virtuellen Oberflächentopographie **8`** der Zähne und den interdental Bereichen dargestellt sind. Ferner ist die Trennlinie **4'** auf der Äquatorlinie **3'** dargestellt, die die Verblendungsschicht **2'** in den ersten Teilbereich **5a'** und zweiten Teilbereich **5b`** aufteilt.

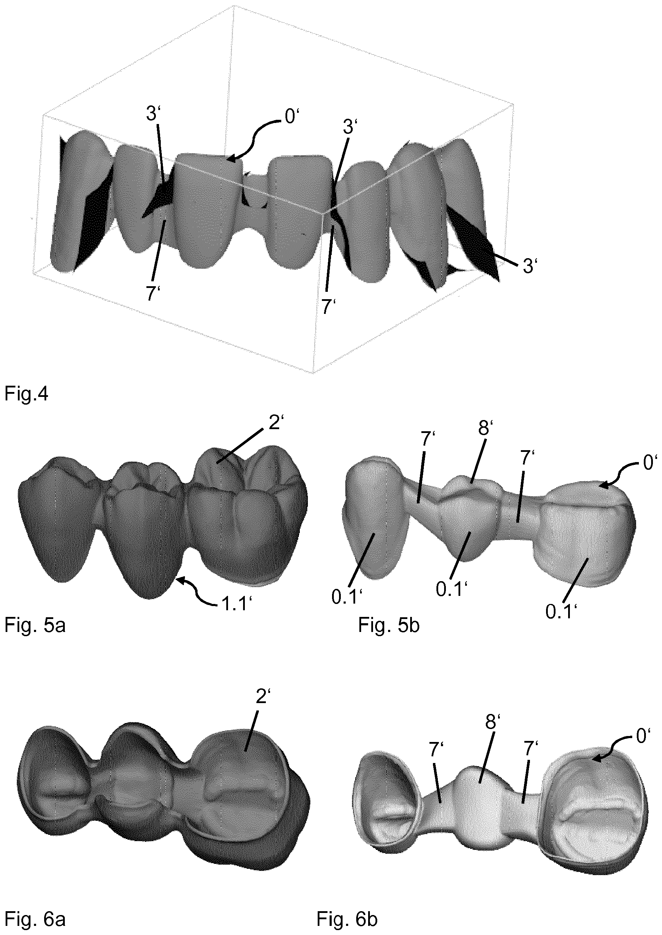

- **Figur 4:**: Stellt dar die Äquatorlinien **3'** im virtuellen interdentalen Bereich **7**' auf dem Gerüst **0'.**
- **Figuren 5a, 5b, 6a und 6b:**: Zeigen die separierte virtuelle Verblendung **2'** in einer Ansicht von oben in **Figur 5a** und von unten in **Figur 6a** sowie das entsprechende virtuelle Gerüst **0`** und dessen Oberflächentopographie **8`** mit virtuellen Gerüstkörpern **0.1**' mit virtuellem interdental Bereich **7**' der virtuellen Brücke **1**' mit virtuellen Brückenkörpern **1.1'** gemäß **Figur 1a** mit virtuellem Brückenkörper **1.1'.**

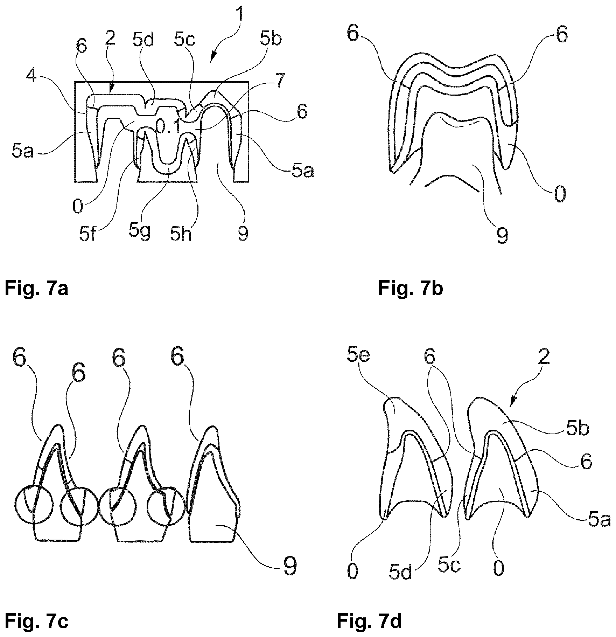

- **Figur 7a bis 7d:**: Zeigen eine Zahnstumpf getragene **9** Brücke **1** umfassend eine reale Verblendung **2** auf einem realen Gerüst **0.** Die Brücke umfasst ein Gerüst **0** mit Gerüstkörpern **0.1.** Die Verblendung **2** der **Figur 7a** ist in Teilbereiche **5a, 5b, 5c, 5d, 5e, 5f, 5g** und **5h** durch Trennfugen **6** unterteilt. Eine Trennlinie **4** ist zwischen den Teilbereichen **5d** und **5e** dargestellt. In den **Figuren 7b** bis **7d** sind weitere Positionen von Trennfugen **6,** einer Verblendung sowie verschiedene Arten von Verblendungsschichten auf einem Gerüst **0** dargestellt. In **Figur 7b** reicht die Verblendungsschicht rechts nicht bis in den Halsbereich. In **Figur 7c** sind weitere Ausführungsformen von Verblendungsschichten mit Trennfugen **6** dargestellt, wobei in der rechten Figur eine Teilverblendung dargestellt ist.
- **Figur 8:**: Aufbau von Verblendungsschichten umfassend eine Verblendung im Schneidebereich **5c,** einer zweiten Verblendungsschicht **2.2,** eine zweite Verblendungsschicht im Dentinbereich **5b, 5d** sowie eine zweite Verblendungsschicht im Halsbereich **5a, 5e,** die jeweils über eine Trennfuge **6** aneinandergefügt sind. Als **5g** ist eine erste Verblendungsschicht **2.1** unter der zweiten Verblendungsschicht **2.2** vorgesehen.
- **Figur 9:**: Zeigt verschiedene Trennfugen **6** als Nut-Feder-Prinzip oder als Negativ und Positiv.

**Bezugszeichen**

| | **real ...** | **virtuell** ... |
|---|---|---|
| Gerüst | **0** | **0'** |
| Brücke | **1** | **1'** |
| Verblendung | **2,2.1,2.2** | **2'** |
| Brückenkörper | | **1.1'** |
| Gerüstkörper | **0.1** | **0.1'** |
| Erste Verblendung | **2.1** | **2.1 '** |
| Weitere Verblendung(en) | **2.2, 2.n** | **2.n'** |
| Äquatorlinie | | **3'** |
| Äquatorebene | | **3.1 '** |
| Trennlinie | **4** | **4'** |
| Teilbereiche | **5a, 5b, 5c, 5d, 5e, 5f, 5g**, **5h** | **5a', 5b', 5n'** |
| Trennfuge | **6** | |
| Interdentaler Bereich | **7** | **7'** |
| Oberflächentopographie | | **8'** |
| Zahnstumpf | **9** | |

## Patentansprüche

1. Verfahren zum Herstellen einer realen Verblendung (2) umfassend mindestens eine reale Verblendungsschicht (2.1) für ein dentales Gerüst (0) zur Herstellung einer verblendeten, dentalen Brücke (1) mit mehreren Brückenkörpern (1.1), indem
(i) ein virtuelles 3D-Modell eines dentalen Gerüstes (0`) umfassend bis sechzehn Gerüstkörper (0.1 `), die im interdentalen Bereich verbunden sind, bereitgestellt wird, wobei das virtuelle Modell die Oberflächentopographie des realen dentalen Gerüstes (0) aufweist,
(ii) auf die Oberflächentopographie (8`) des virtuellen 3D-Modells des dentalen Gerüstes wird mindestens eine zumindest teilweise die Oberfläche des virtuellen Gerüstes bedeckende erste virtuelle Verblendungsschicht (2.1') konstruiert,
(iii) die mindestens eine erste virtuelle Verblendungsschicht (2.1', 2.2`) wird entlang des Verlaufs ihrer jeweiligen Äquatorlinie (3`) auf ihrer Oberflächentopographie jeweils mit einer Trennlinie (4`) versehen, wobei die Äquatorlinien (3`) auf der äußeren Verblendungsschicht im labialen und bukkalen oder vestibulären Bereich und auf der inneren Verblendungsschicht im lingualen, palatinalen oder oralen Bereich verlaufen,(iv) entlang der jeweiligen Trennlinie (4`) wird die mindestens eine erste virtuelle Verblendungsschicht (2.1', 2.2`) in jeweils zwei virtuelle Teilbereiche 4(5a', 5b') separiert,
(v) Erhalten eines ersten und zweiten Teilbereiches (5a', 5b`) der mindestens einen ersten Verblendungsschicht (2.1', 2.2'),
(vi) optional werden auf der Oberflächentopographie der mindestens einen ersten virtuellen Verblendungsschicht weitere Trennlinien (4') vorgesehen, um weitere virtuelle Teilbereiche zu definieren,
(vii) Bereitstellen der digitalen Daten des jeweiligen ersten und zweiten virtuellen Teilbereiches der mindestens einen ersten virtuellen Verblendungsschicht sowie der optionalen weiteren virtuellen Teilbereiche der jeweiligen Verblendungsschicht, und
(viii) Herstellen des jeweiligen ersten und zweiten realen Teilbereiches der mindestens einen ersten realen Verblendungsschicht sowie der optionalen weiteren realen Teilbereiche der jeweiligen realen Verblendungsschicht mittels generativer oder ablativer Verfahren unter Verwendung der digitalen Daten,
(ix) Anordnen des jeweiligen ersten und zweiten realen Teilbereiches der mindestens einen ersten realen Verblendungsschicht sowie der optionalen weiteren realen Teilbereiche der jeweiligen realen Verblendungsschicht zu mindestens einer ersten realen Verblendungsschicht auf dem dentalen Gerüst (0) und
(x) Erhalten der mindestens einen ersten Verblendungsschicht der realen Verblendung.

2. Verfahren zum Herstellen einer realen Verblendung (2) umfassend mindestens eine reale Verblendungsschicht für ein dentales Gerüst zur Herstellung einer verblendeten, dentalen Brücke mit mehreren Brückenkörpern, indem
(i) ein virtuelles 3D-Modell eines dentalen Gerüstes (0`) umfassend bis sechzehn Gerüstkörper (0.1 `), die im interdentalen Bereich verbunden sind, bereitgestellt wird, wobei das virtuelle Modell die Oberflächentopographie des realen dentalen Gerüstes (0) aufweist,
(ii) auf die Oberflächentopographie des virtuellen 3D-Modells des dentalen Gerüstes wird mindestens eine zumindest teilweise die Oberfläche des virtuellen Gerüstes bedeckende erste virtuelle Verblendungsschicht (2.1') konstruiert, und auf die erste virtuelle Verblendung wird mindestens eine weitere virtuelle Verblendungsschicht (2.2`), die zumindest teilweise die erste virtuelle Verblendungsschicht bedeckt, konstruiert,
(iii) die erste und die mindestens eine weitere virtuelle Verblendungsschicht (2.1', 2.2`) werden jeweils unabhängig voneinander entlang des Verlaufs ihrer jeweiligen Äquatorlinie (3') auf ihrer Oberflächentopographie jeweils mit einer Trennlinie (4') versehen, wobei die Äquatorlinien (3`) auf der äußeren Verblendungsschicht im labialen und bukkalen oder vestibulären Bereich und auf der inneren Verblendungsschicht im lingualen, palatinalen oder oralen Bereich verlaufen,
(iv) entlang der jeweiligen Trennlinie (4`) wird die eine erste und die mindestens eine weitere virtuelle Verblendungsschicht (2.1', 2.2') in jeweils zwei virtuelle Teilbereiche (5a', 5b`) separiert,
(v) Erhalten eines ersten und zweiten Teilbereiches (5a`, 5b`) der jeweiligen Verblendungsschicht (2.1', 2.2'),
(vi) optional werden auf der Oberflächentopographie der ersten und optional der mindestens einen weiteren virtuellen Verblendungsschicht weitere Trennlinien (4`) vorgesehen, um weitere virtuelle Teilbereiche (5n`) zu definieren,
(vii) Bereitstellen der digitalen Daten des jeweiligen ersten und zweiten virtuellen Teilbereiches der ersten und der mindestens einen weiteren virtuellen Verblendungsschicht sowie der optionalen weiteren virtuellen Teilbereiche der jeweiligen Verblendungsschicht, und
(viii) Herstellen des jeweiligen ersten und zweiten realen Teilbereiches der ersten und der mindestens einen weiteren realen Verblendungsschicht sowie der optionalen weiteren realen Teilbereiche der jeweiligen realen Verblendungsschicht mittels generativer oder ablativer Verfahren unter Verwendung der digitalen Daten,
(ix) Anordnen des jeweiligen ersten und zweiten realen Teilbereiches der ersten und optional der mindestens einen weiteren realen Verblendungsschicht sowie der optionalen weiteren realen Teilbereiche der jeweiligen realen Verblendungsschicht zu einer ersten und mindestens einen weiteren realen Verblendungsschicht auf dem dentalen Gerüst (0) und
(x) Erhalten der mindestens einen ersten und mindestens einen weiteren Verblendungsschichten der realen Verblendung.

3. Verfahren nach Anspruch 1 oder 2, **dadurch gekennzeichnet, dass** die jeweiligen Trennlinien (4') entlang der jeweiligen Äquatorlinie (3') der ersten und optional mindestens einen weiteren virtuellen Verblendungsschicht (2.1', 2.1') verlaufen.

4. Verfahren nach einem der Ansprüche 1 bis 3, **dadurch gekennzeichnet, dass** in
(vi) auf der Oberflächentopographie der ersten und optional der weiteren virtuellen Verblendungsschicht (2.1', 2.1') weitere Trennlinien (4`) vorgesehen sind, um weitere virtuelle Teilbereiche zu definieren, und die jeweilige Trennlinien unabhängig voneinander entlang einer virtuellen Halsverblendungsschicht, einer Dentinverblendungsschicht, und/oder einer Schneideverblendungsschicht verlaufen.

5. Verfahren nach einem der Ansprüche 1 bis 4, **dadurch gekennzeichnet, dass**
- mindestens eine Trennlinie als virtuelle Trennfuge (6`) ausgebildet ist,
a) wobei die virtuelle Trennfuge als Übergang zwischen mindestens zwei virtuellen Teilbereichen der virtuellen Verblendungsschicht vorliegt, und insbesondere mit definierter Stoßbreite als Abstand zwischen den mindestens zwei virtuellen Teilbereichen vorliegt, und/oder
b) die virtuelle Trennfuge der jeweiligen virtuellen Teilbereiche als Positiv und Negativ vorliegt, und/oder
c) wobei in der virtuellen Verblendungsschicht jeweils mindestens eine virtuelle Trennfuge zwischen der virtuellen Halsverblendungsschicht, Dentinverblendungsschicht und/oder der Schneideverblendungsschicht vorliegt, oder
d) die virtuelle Trennfuge zumindest teilweise mit Nut-Feder-Verbindung versehen ist, und/oder
e) der jeweilige Teilbereich der virtuellen Verblendung über einen kraftschlüssigen Verbund des Teilbereiches und/oder des Teilbereiches mit dem virtuellen Gerüst verbunden ist, und/oder
f) der jeweilige Teilbereich der virtuellen Verblendung mindestens eine Nut auf der gerüstseitigen, inneren Oberfläche aufweist, oder
g) eine Kombination von a) und c) oder b) und c) oder b) und d) oder b) und e) oder a) und d) oder a) und e) oder a) und f) oder a), c) und d) oder d) und f) oder
- eine reale Verblendungsschicht mindestens eine reale Trennfuge (6) aufweist,
a) wobei die reale Trennfuge als Übergang zwischen mindestens zwei realen Teilbereichen der realen Verblendungsschicht vorliegt, und insbesondere mit definierter Stoßbreite als Abstand zwischen den mindestens zwei realen Teilbereichen vorliegt, und/oder
b) die reale Trennfuge der jeweiligen realen Teilbereiche als Positiv und Negativ vorliegt, und/oder
c) wobei in der realen Verblendungsschicht jeweils mindestens eine reale Trennfuge zwischen der realen Halsverblendungsschicht, Dentinverblendungsschicht und/oder der Schneideverblendungsschicht vorliegt, oder
d) die reale Trennfuge zumindest teilweise mit Nut-Feder-Verbindung versehen ist, und/oder
e) der jeweilige Teilbereich der realen Verblendung über einen kraftschlüssigen Verbund des Teilbereiches und/oder des Teilbereiches mit dem realen Gerüst verbunden ist, und/oder
f) der jeweilige Teilbereich der realen Verblendung mindestens eine Nut auf der gerüstseitigen, inneren Oberfläche aufweist, oder
g) eine Kombination von a) und c) oder b) und c) oder b) und d) oder b) und e) oder a) und d) oder a) und e) oder a) und f) oder a), c) und d) oder d) und f).

6. Verfahren nach einem der Ansprüche 1 bis 5, **dadurch gekennzeichnet, dass** die reale oder virtuelle erste oder optional mindestens eine weitere Verblendungsschicht eine Verblendung
a) der Okklusalkante umfasst, oder
b) der Okkulsalkante und mindestens eines labialen Zahnhalses, oder
c) eine Vollverblendung der Okklusalkante sowie mindestens eines oralen, labialen und approximalen Zahnhalses oder der Zahnhälse, oder
d) eine Teilverblendung umfassend die Verblendung der Okklusalkante sowie des mindestens einen labialen und zumindest teilweise approximalen Zahnhalses umfasst.

7. Verfahren nach einem der Ansprüche 1 bis 6, **dadurch gekennzeichnet, dass** die reale oder virtuelle erste oder optional mindestens eine weitere Verblendungsschicht unterschiedliche Farben aufweisen und/oder eine unterschiedliche Transparenz aufweisen.

8. Verfahren nach einem der Ansprüche 1 bis 7, **dadurch gekennzeichnet, dass** das Material der ersten oder mindestens einen weiteren realen Verblendungsschicht (2.1, 2.2, 2n), der ersten und zweiten sowie der weiteren Teilbereiche (5a, 5b, 5n) der jeweiligen realen Verblendungsschicht umfasst eine dentale Keramik ausgewählt aus Metalloxid, Zirkondioxid, Aluminiumoxid, Silikaten, dentale Kompositmaterialien, polymeres Material, Polymethyl(meth)acrylat basierten Polymeren, Zusammensetzungen umfassend Polymethyl(meth)acrylat basierte Polymere und anorganische Füllstoffe, oder Hybridwerkstoffe der vorgenannten Materialien.

9. Verfahren nach einem der Ansprüche 1 bis 8, **dadurch gekennzeichnet, dass** die Schichtdicke der jeweiligen realen ersten oder mindestens einen weiteren Verblendungsschicht 10 µm bis 5000 µm beträgt, insbesondere 50 µm bis 5000 µm, vorzugsweise von 100 µm bis 5000 µm, besonders bevorzugt von 700 µm bis 3000 µm, alternativ 100 µm bis 2000 µm, alternativ 700 µm bis 2000 µm.

10. Verfahren nach einem der Ansprüche 1 bis 9, **dadurch gekennzeichnet, dass** eine Verblendungsschicht vorzugsweise ein Material mit den folgenden Farbwerten der Farbe A3: L von 50 bis 95, a von -5 bis 5, b von 3 bis 25 umfasst, mit L = Helligkeit, a = rot, b = blau gemäß dem L*a*b*-Farbsystem (DIN EN ISO 11664-4).

11. Verfahren nach einem der Ansprüche 1 bis 9, **dadurch gekennzeichnet, dass** die Transparenz für die Scheideschicht 80 bis 98% beträgt.

12. Verfahren nach einem der Ansprüche 1 bis 11, **dadurch gekennzeichnet, dass** eine innere Verblendungsschicht aus opakem Material mit folgenden Farbwerten der Farbe A3: L von 50 bis 80; a von 2 bis 5, b von 15 bis 22 ist, mit L = Helligkeit, a = rot, b = blau gemäß dem L*a*b*-Farbsystem (DIN EN ISO 11664-4).

13. Verfahren nach einem der Ansprüche 1 bis 11, **dadurch gekennzeichnet, dass** eine äußere Verblendungsschicht aus einem transparenten Material mit den Farbwerten der Farbe A3: L von 60 bis 95; a von -5 bis 3; b von 3 bis 2 aufweist, mit L = Helligkeit, a = rot, b = blau gemäß dem L*a*b*-Farbsystem (DIN EN ISO 11664-4).

14. Verblendung erhältlich nach einem Verfahren nach einem der Ansprüche 5 bis 9 mit Bezug auf die reale Verblendungsschicht mit mindestens einer realen Trennfuge, umfassend mindestens eine reale Verblendungsschicht für ein dentales Gerüst zur Herstellung einer verblendeten, dentalen Brücke mit mehreren Brückenkörpern, wobei der erste und zweite reale werkstoffeinstückige Teilbereich der mindestens einen ersten realen Verblendungsschicht sowie die optionalen weiteren realen Teilbereiche der jeweiligen realen Verblendungsschicht hergestellt werden mittels automatisierter Computer gestützter generativer und/oder ablativer Verfahren unter Verwendung der digitalen Daten aus Schritt (vii) nach Anspruch 1 oder 2, wobei die Trennfuge in der realen Verblendung entlang der Trennlinie auf der virtuellen Verblendung verläuft.

## Claims

1. Method for producing a real veneer (2) comprising at least one real veneer layer (2.1) for a dental scaffold (0) for producing a veneered dental bridge (1) with several bridge bodies (1.1), in that
(i) a virtual 3D model of a dental scaffold (0') comprising up to sixteen scaffold bodies (0.1') connected in the interdental region, is provided, wherein the virtual model has the surface topography of the real dental scaffold (0),
(ii) at least one first virtual veneer layer (2.1') covering at least partially the surface of the virtual scaffold is constructed on the surface topography (8') of the virtual 3D model of the dental scaffold,
(iii) the at least one first virtual veneer layer (2.1', 2.2') is provided with a separating line (4') along the course of its respective equator line (3') on its surface topography,
wherein the equator lines (3') extend on the outer veneer layer in the labial and buccal or vestibular region and on the inner veneer layer in the lingual, palatal or oral region,
(iv) along the respective separating line (4'), the at least one first virtual veneer layer (2.1', 2.2') is separated into two virtual partial regions 4(5a', 5b'),
(v) obtaining a first and second partial region (5a', 5b') of the at least one first veneer layer (2.1', 2.2'),
(vi) optionally, further dividing lines (4') are provided on the surface topography of the at least one first virtual veneer layer in order to define further virtual sub-areas,
(vii) providing the digital data of the respective first and second virtual sub-areas of the at least one first virtual veneer layer and of the optional further virtual sub-areas of the respective veneer layer, and
(viii) producing the respective first and second real sub-areas of the at least one first real veneer layer and the optional further real sub-areas of the respective real veneer layer by means of generative or ablation methods using the digital data,
(ix) arranging the respective first and second real partial regions of the at least one first real veneer layer and the optional further real partial regions of the respective real veneer layer to form at least one first real veneer layer on the dental scaffold (0), and
(x) obtaining the at least one first veneer layer of the real veneer.

2. Method for the production of a real veneer layer (2) comprising at least one real veneering layer for a dental scaffold for the production of a veneered dental bridge with several bridge bodies, in that
(i) a virtual 3D model of a dental scaffold (0') comprising up to sixteen scaffold bodies (0.1') connected in the interdental region is provided, wherein the virtual model has the surface topography of the real dental scaffold (0),
(ii) at least one first virtual veneer layer (2.1 ') covering at least partially the surface of the virtual scaffold is constructed on the surface topography of the virtual 3D model of the dental scaffold, and at least one further virtual veneer layer (2.2) covering at least partially the first virtual veneer layer is constructed on the first virtual veneer,
(iii) the first and the at least one further virtual veneer layer (2.1', 2.2') are each provided with a separating line (4') independently of one another along the course of their respective equator line (3') on their surface topography,
wherein the equator lines (3') extend on the outer veneer layer in the labial and buccal or vestibular region and on the inner veneer layer in the lingual, palatal or oral region,
(iv) along the respective separating line (4'), the one first and the at least one further virtual veneer layer (2.1 ', 2.2') is separated into two virtual partial regions (5a', 5b') in each case,
(v) obtaining a first and second partial region (5a', 5b') of the respective veneer layer (2.1 ', 2.2'),
(vi) optionally, further dividing lines (4') are provided on the surface topography of the first and optionally of the at least one further virtual veneer layer in order to define further virtual partial regions (5n'),
(vii) providing the digital data of the respective first and second virtual sub-areas of the first and optionally of the at least one further virtual veneer layer as well as of the further virtual sub-areas of the respective veneer layer, and
(viii) producing the respective first and second real sub-areas of the first and of the at least one further real veneer layer and of the optional further real sub-areas of the respective real veneer layer by means of generative or ablation methods using the digital data,
(ix) arranging the respective first and second real sub-areas of the first and of the at least one further real veneer layer and of the optional further real sub-areas of the respective real veneer layer to form a first and optionally at least one further real veneer layer on the dental scaffold (0), and
(x) obtaining the at least one first and at least one further veneer layers of the real veneer.

3. Method according to claim 1 or 2, **characterised in that** the respective dividing lines (4') extend along the respective equator line (3') of the first and optionally at least one further virtual veneer layer (2.1 ', 2.1 ').

4. Method according to one of claims 1 to 3, **characterized in that** in
(vi) on the surface topography of the first and optionally of the further virtual veneer layer (2.1 ', 2.1 ') further dividing lines (4') are provided, in order to define further virtual sub-areas, and the respective dividing lines extend independently of one another along a virtual neck veneer layer, a dentin veneer layer, and/or a cutting veneer layer.

5. Method according to one of claims 1 to 4, **characterized in that**
- at least one dividing line is designed as a virtual interstice (6'),
a) wherein the virtual interstice is present as a transition between at least two virtual sub-areas of the virtual veneer layer, and in particular is present with a defined joint width as a distance between the at least two virtual sub-areas, and/or
b) the virtual interstice of the respective virtual partial regions is present as positive and negative, and/or
c) wherein in the virtual veneer layer there is in each case at least one virtual interstice between the virtual neck veneer layer, dentin veneer layer and/or the cutting veneer layer, or
d) the virtual interstice is at least partially provided with a tongue-and-groove connection, and/or
e) the respective partial region of the virtual veneer is connected to the virtual scaffold via a force-locking bond of the partial region and/or of the partial region, and/or
f) the respective partial region of the virtual veneer has at least one groove on the scaffold-side, inner surface, or
g) a combination of a) and c) or b) and c) or b) and d) or b) and e) or a) and d) or a) and e) or a) and f) or a), c) and d) or d) and f) or
a real veneer layer has at least one real interstice (6),
a) wherein the real interstice is present as a transition between at least two real partial regions of the real veneer layer, and in particular is present with a defined joint width as a distance between the at least two real partial regions, and/or
b) the real interstice of the respective real partial regions is present as positive and negative, and/or
c) wherein in the real veneer layer there is in each case at least one real interstice between the real neck veneer layer, dentin veneer layer and/or the cutting veneer layer, or
d) the real interstice is at least partially provided with a tongue-and-groove connection, and/or
e) the respective partial region of the real veneer is connected to the real scaffold via a force-locking bond of the partial region and/or of the partial region, and/or
f) the respective partial region of the real veneer has at least one groove on the scaffold-side, inner surface, or
g) a combination of a) and c) or b) and c) or b) and d) or b) and e) or a) and d) or a) and e) or a) and f) or a), c) and d) or d) and f).

6. Method according to one of claims 1 to 5, **characterized in that** the real or virtual first or optionally at least one further veneer layer is a veneering
a) comprising of the occlusal edge, or
b) of the occulsal edge and at least one labial tooth neck, or
c) a full veneering of the occlusal edge as well as of at least one oral, labial and approximal tooth neck or tooth neck, or
d) comprising a partial veneer comprising veneering the occlusal edge and the at least one labial and at least partially approximated tooth neck.

7. Method according to one of claims 1 to 6, **characterized in that** the real or virtual first or optionally at least one further veneer layer has different colours and/or has different transparency.

8. Method according to one of claims 1 to 7, **characterized in that** the material of the first or at least one further real veneer layer (2.1, 2.2, 2n), of the first and second and also of the further partial regions (5a, 5b, 5n) of the respective real veneer layer comprising a dental ceramic selected from metal oxide, zirconium dioxide, aluminium oxide, silicates, dental composite materials, polymeric material, polymethyl(meth)acrylate-based polymers, compositions comprising polymethyl(meth)acrylate-based polymers and inorganic fillers, or hybrid materials of the aforementioned materials.

9. Method according to one of Claims 1 to 8, **characterized in that** the layer thickness of the respective real first or at least one further veneering layer is 10 µm to 5000 µm, in particular 50 µm to 5000 µm, preferably from 100 µm to 5000 µm, particularly preferably from 700 µm to 3000 µm, alternatively 100 µm to 2000 µm, alternatively 700 µm to 2000 µm.

10. Method according to any one of claims 1 to 9, **characterized in that** a veneering layer preferably comprises a material having the following colour values of colour A3: L from 50 to 95, a from -5 to 5, b from 3 to 25, with L = brightness,
a = red, b = blue according to the L*a*b* colour system (DIN EN ISO 11664-4).

11. Method according to any one of claims 1 to 9, **characterized in that** the transparency for the separating layer is 80 to 98%.

12. Method according to any one of claims 1 to 11, **characterized in that** an inner veneer layer is made of opaque material with the following colour values of the colour A3: L is from 50 to 80; a is from 2 to 5, b is from 15 to 22, with L = lightness,
a = red, b = blue according to the L*a*b* colour system (DIN EN ISO 11664-4).

13. Method according to any one of claims 1 to 11, **characterized in that** an outer veneer layer is made of a transparent material with the colour values of the colour A3: L from 60 to 95; a from -5 to 3; b from 3 to 2, with L = brightness,
a = red, b = blue according to the L*a*b* colour system (DIN EN ISO 11664-4).

14. A veneer obtainable by a method according to any one of claims 5 to 9 with reference to the real veneer layer with at least one interstice, comprising at least one real veneer layer for a dental scaffold for producing a veneered dental bridge with several bridge bodies, wherein the first and second real one-piece material portions of the at least one first real veneer layer and the optional further real portions of the respective real veneer layer are produced by means of automated computer-assisted generative and/or ablative processes using the digital data from step (vii) according to claim 1 or 2, wherein the interstice in the real veneer runs along the dividing line on the virtual veneer.

## Revendications

1. Procédé de fabrication d'un revêtement réel (2) comprenant au moins une couche de revêtement réelle (2.1) pour une armature dentaire (0) pour la fabrication d'un bridge dentaire revêtu (1) avec plusieurs éléments de bridge (1.1), **caractérisé en ce que**
(i) un modèle 3D virtuel d'une armature dentaire (0') comprenant jusqu'à seize éléments d'armature (0.1') reliés dans la zone interdentaire est mis à disposition, le modèle virtuel présentant la topographie de surface de l'armature dentaire réelle (0),
(ii) au moins une première couche de revêtement virtuelle (2.1'), recouvrant au moins partiellement la surface de l'armature virtuelle, est conçue sur la topographie de surface (8') du modèle virtuel 3D de l'armature dentaire,
(iii) la au moins une première couche de revêtement virtuelle (2.1', 2.2') est pourvue d'une ligne de séparation (4') le long du tracé de sa ligne équatoriale respective (3') sur sa topographie de surface, les lignes équatoriales (3') s'étendant sur la couche de revêtement extérieure dans la zone labiale et buccale ou vestibulaire et sur la couche de revêtement intérieure dans la zone linguale, palatine ou orale,(iv) la au moins une première couche de revêtement virtuelle (2.1', 2.2') est respectivement séparée en deux zones partielles virtuelles 4(5a', 5b') le long de la ligne de séparation respective (4') ,
(v) une première et une deuxième zone partielle (5a', 5b') de la au moins une première couche de revêtement (2.1', 2.2') sont obtenues,
(vi) en option, d'autres lignes de séparation (4') sont prévues sur la topographie de surface de la au moins une première couche de revêtement virtuelle afin de définir d'autres zones partielles virtuelles,
(vii) les données numériques des première et deuxième zones partielles virtuelles respectives de la au moins une première couche de revêtement virtuelle ainsi que des autres zones partielles virtuelles optionnelles de la couche de revêtement respective sont mises à disposition, et
(viii) les première et deuxième zones partielles réelles respectives de la au moins une première couche de revêtement réelle ainsi que des autres zones partielles réelles optionnelles de la couche de revêtement réelle respective sont fabriquées au moyen de procédés génératifs ou ablatifs en utilisant les données numériques,
(ix) les première et deuxième zones partielles réelles respectives de la au moins une première couche de revêtement réelle ainsi que les autres zones partielles réelles optionnelles de la couche de revêtement réelle respective sont disposées en au moins une première couche de revêtement réelle sur l'armature dentaire (0) et
(x) la au moins une première couche de revêtement du revêtement réel est obtenue.

2. Procédé de fabrication d'un revêtement réel (2) comprenant au moins une couche de revêtement réelle pour une armature dentaire pour la fabrication d'un bridge dentaire revêtu avec plusieurs éléments de bridge, **caractérisé en ce que**
(i) un modèle 3D virtuel d'une armature dentaire (0') comprenant jusqu'à seize éléments d'armature (0.1') reliés dans la zone interdentaire est mis à disposition, le modèle virtuel présentant la topographie de surface de l'armature dentaire réelle (0),
(ii) au moins une première couche de revêtement virtuelle (2.1'), recouvrant au moins partiellement la surface de l'armature virtuelle, est conçue sur la topographie de surface du modèle 3D virtuel de l'armature dentaire, au moins une autre couche de revêtement virtuelle (2.2'), recouvrant au moins partiellement la première couche de revêtement virtuelle, est conçue sur le premier revêtement virtuel,
(iii) la première et l'au moins une autre couche de revêtement virtuelle (2.1', 2.2') sont respectivement pourvues, indépendamment l'une de l'autre, d'une ligne de séparation (4') le long du tracé de leur ligne équatoriale respective (3') sur leur topographie de surface, les lignes équatoriales (3') s'étendant sur la couche de revêtement extérieure dans la zone labiale et buccale ou vestibulaire et sur la couche de revêtement intérieure dans la zone linguale, palatine ou orale,
(iv) la première et la au moins une autre couche de revêtement virtuelle (2.1', 2.2') sont respectivement séparées en deux zones partielles virtuelles (5a', 5b') le long de la ligne de séparation respective (4'),
(v) une première et une deuxième zone partielle (5a', 5b') de la couche de revêtement respective (2.1', 2.2') sont obtenues,
(vi) en option, d'autres lignes de séparation (4') sont prévues sur la topographie de surface de la première et en option de la au moins une autre couche de revêtement virtuelle afin de définir d'autres zones partielles virtuelles (5n'),
(vii) les données numériques des première et deuxième zones partielles virtuelles respectives de la première et de la au moins une autre couche de revêtement virtuelle ainsi que des autres zones partielles virtuelles optionnelles de la couche de revêtement respective sont mises à disposition, et
(viii) les première et deuxième zones partielles réelles respectives de la première et de la au moins une autre couche de revêtement réelle ainsi que des autres zones partielles réelles optionnelles de la couche de revêtement réelle respective sont fabriquées au moyen de procédés génératifs ou ablatifs en utilisant les données numériques,
(ix) les première et deuxième zones partielles réelles respectives de la première et, en option, de la au moins une autre couche de revêtement réelle ainsi que les autres zones partielles réelles optionnelles de la couche de revêtement réelle respective sont disposées en une première et au moins une autre couche de revêtement réelle sur l'armature dentaire (0) et
(x) la au moins une première couche de revêtement et au moins une autre couche de revêtement du revêtement réel sont obtenues.

3. Procédé selon la revendication 1 ou 2, **caractérisé en ce que** les lignes de séparation respectives (4') s'étendent le long de la ligne équatoriale respective (3') de la première couche de revêtement virtuelle et en option d'au moins une autre couche de revêtement virtuelle (2.1', 2.1').

4. Procédé selon l'une des revendications 1 à 3, **caractérisé en ce que** (vi) d'autres lignes de séparation (4') sont prévues sur la topographie de surface de la première et, en option, de l'autre couche de revêtement virtuelle (2.1', 2.1') afin de définir d'autres zones partielles virtuelles et les lignes de séparation respectives s'étendent indépendamment les unes des autres le long d'une couche de revêtement de collet virtuelle, d'une couche de revêtement de dentine et/ou d'une couche de revêtement de coupe.

5. Procédé selon l'une des revendications 1 à 4, **caractérisé en ce que**
- au moins une ligne de séparation est réalisée comme joint de séparation virtuel (6'),
a) le joint de séparation virtuel étant présent comme transition entre au moins deux zones partielles virtuelles de la couche de revêtement virtuelle, et étant notamment présent avec une largeur de joint définie comme distance entre les au moins deux zones partielles virtuelles, et/ou
b) le joint de séparation virtuel des zones partielles virtuelles respectives étant présent en positif et en négatif, et/ou
c) au moins un joint de séparation virtuel entre la couche de revêtement de collet, la couche de revêtement de dentine et/ou la couche de revêtement de coupe virtuelle étant présent dans la couche de revêtement virtuelle, ou
d) le joint de séparation virtuel étant au moins partiellement pourvu d'un assemblage par rainure et languette, et/ou
e) la zone partielle respective du revêtement virtuel étant reliée à l'armature virtuelle par une liaison par adhérence de la zone partielle et/ou de la zone partielle, et/ou
f) la zone partielle respective du revêtement virtuel présentant au moins une rainure sur la surface intérieure côté armature, ou
g) une combinaison de a) et c) ou b) et c) ou b) et d) ou b) et e) ou a) et d) ou a) et e) ou a) et f) ou a), c) et d) ou d) et f) ou
- une couche de revêtement réelle présente au moins un joint de séparation réel (6),
a) le joint de séparation réel étant présent comme transition entre au moins deux zones partielles réelles de la couche de revêtement réelle, et étant notamment présent avec une largeur de joint définie comme distance entre les au moins deux zones partielles réelles, et/ou
b) le joint de séparation réel des zones partielles réelles respectives étant présent en positif et en négatif, et/ou
c) au moins un joint de séparation réel entre la couche de revêtement de collet, la couche de revêtement de dentine et/ou la couche de revêtement de coupe réelle étant présent dans la couche de revêtement réelle, ou
d) le joint de séparation réel étant au moins partiellement pourvu d'un assemblage par rainure et languette, et/ou
e) la zone partielle respective du revêtement réel étant reliée à l'armature réelle par une liaison par adhérence de la zone partielle et/ou de la zone partielle, et/ou
f) la zone partielle respective du revêtement réel présentant au moins une rainure sur la surface intérieure côté armature, ou
g) une combinaison de a) et c) ou de b) et c) ou de b) et d) ou de b) et e) ou de a) et d) ou de a) et e) ou de a) et f) ou de a), c) et d) ou d) et f).

6. Procédé selon l'une des revendications 1 à 5, **caractérisé en ce que** la première couche de revêtement réelle ou virtuelle ou, en option, au moins une autre couche de revêtement comprend
a) un revêtement du bord occlusal, ou
b) un revêtement du bord occulte et au moins d'un collet labial, ou
c) un revêtement complet du bord occlusal ainsi que d'au moins un collet oral, labial et proximal ou des collets, ou
d) un revêtement partiel comprenant le revêtement du bord occlusal ainsi que de l'au moins un collet labial et au moins partiellement proximal.

7. Procédé selon l'une des revendications 1 à 6, **caractérisé en ce que** la première couche de revêtement réelle ou virtuelle ou, en option, au moins une autre couche de revêtement présente des couleurs différentes et/ou une transparence différente.

8. Procédé selon l'une des revendications 1 à 7, **caractérisé en ce que** le matériau de la première ou d'au moins une autre couche de revêtement réelle (2.1, 2.2, 2n), des première et deuxième zones partielles ainsi que des autres zones partielles (5a, 5b, 5n) de la couche de revêtement réelle respective comprend une céramique dentaire sélectionnée à partir d'oxyde métallique, de dioxyde de zirconium, d'oxyde d'aluminium, de silicates, de matériaux composites dentaires, matériaux polymères, polymères à base de polyméthyl(méth)acrylate, compositions comprenant des polymères à base de polyméthyl(méth)acrylate et des charges inorganiques ou matériaux hybrides des matériaux susmentionnés.

9. Procédé selon l'une des revendications 1 à 8, **caractérisé en ce que** l'épaisseur de couche de la première couche de revêtement réelle respective ou d'au moins une autre couche de revêtement est comprise entre 10 µm et 5000 µm, en particulier entre 50 µm et 5000 µm, préférablement entre 100 µm et 5000 µm, plus préférablement entre 700 µm et 3000 µm, alternativement entre 100 µm et 2000 µm, alternativement entre 700 µm et 2000 µm.

10. Procédé selon l'une des revendications 1 à 9, **caractérisé en ce qu'**une couche de revêtement comprend préférablement un matériau ayant les valeurs chromatiques suivantes de la couleur A3 : L de 50 à 95, a de -5 à 5, b de 3 à 25, avec L = luminosité, a = rouge, b = bleu selon le système de couleurs L*a*b* (DIN EN ISO 11664-4).

11. Procédé selon l'une des revendications 1 à 9, **caractérisé en ce que** la transparence pour la couche de séparation est de 80 à 98%.

12. Procédé selon l'une des revendications 1 à 11, **caractérisé en ce qu'**une couche de revêtement intérieure en matériau opaque présente les valeurs chromatiques suivantes de la couleur
A3 : L de 50 à 80 ; a de 2 à 5, b de 15 à 22, avec L = luminosité,
a = rouge, b = bleu selon le système de couleurs L*a*b* (DIN EN ISO 11664-4).

13. Procédé selon l'une des revendications 1 à 11, **caractérisé en ce qu'**une couche de revêtement extérieure en un matériau transparent présente les valeurs chromatiques de la couleur A3 : L de 60 à 95 ; a de -5 à 3 ; b de 3 à 2, avec L = luminosité,
a = rouge, b = bleu selon le système de couleurs L*a*b* (DIN EN ISO 11664-4).

14. Revêtement pouvant être obtenu par un procédé selon l'une des revendications 5 à 9 en référence à la couche de revêtement réelle avec au moins un joint de séparation réel, comprenant au moins une couche de revêtement réelle pour une armature dentaire pour la fabrication d'un bridge dentaire revêtu avec plusieurs éléments de bridge, la première et la deuxième zone partielle réelle en une seule pièce de matériau de la au moins une première couche de revêtement réelle ainsi que les autres zones partielles réelles optionnelles de la couche de revêtement réelle respective étant fabriquées au moyen de procédés génératifs et/ou ablatifs automatisés assistés par ordinateur en utilisant les données numériques de l'étape (vii) selon la revendication 1 ou 2, le joint de séparation dans le revêtement réel s'étendant le long de la ligne de séparation sur le revêtement virtuel.
